# FASCICULE DE BREVET EUROPEEN

(11) **EP 0 462 858 B1**
(45) Date de publication et mention de la délivrance du brevet: **28.06.1995**
(21) Numéro de dépôt: 91401429.5
(22) Date de dépôt: 31.05.1991
(51) Int. Cl.: F16K 7/10

(54) **Dispositif de protection contre des dégagements incontrôlables de gaz et poche d'isolation formant élément d'un tel dispositif**
Schutzvorrichtung gegen unkontrollierbare Gasaustritte und Schutzhülle als Teil dieser Vorrichtung
Protection device against uncontrollable emissions of gas and insulation bag being part of such a device

(30) Priorité: 11.06.1990 FR 9007244
(43) Date de publication de la demande: 27.12.1991
(73) Titulaire: GAZ DE FRANCE (SERVICE NATIONAL), F-75840 Paris (FR)
(72) Inventeur: François, Jacques, F-92120 Issy-Les-Moulineaux (FR)
(74) Mandataire: Lerner, François

(56) Documents cités:
- DE-U- 8 815 499
- GB-A- 2 137 718

## Description

L'invention concerne un dispositif de protection, contre des dégagements incontrôlables de gaz, d'un opérateur devant mener, depuis l'extérieur, une investigation ou une intervention sur ou à l'intérieur d'une canalisation dans laquelle circule du gaz nocif, en atmosphère basse pression (de l'ordre de 20 à 50.10² Pa habituellement).

Couramment, ce type d'intervention se déroule avec une protection individuelle telle gu'un masque. L'opérateur étant malgré tout plus ou moins, soumis au dégagement gazeux qui n'est pas contrôlé, il s'agit là d'une situation dangereuse. En outre, ces gaz sont habituellement inflammables, ce qui augmente d'autant les risques d'accident.

A partir du brevet GB-A-2 137 718, on connaît un dispositif de protection plus évolué qui comprend :
- un sas auquel sont réunis les moyens d'investigation ou d'intervention sur, ou dans, la canalisation, ces moyens étant manoeuvrables depuis l'extérieur du sas pour éviter à l'opérateur d'être en contact avec l'atmosphère régnant dans la canalisation,
- et une pièce d'adaptation transversale du sas à la canalisation, cette pièce présentant un orifice obturable par un opercule pour faire communiquer à volonté le sas avec l'intérieur de ladite canalisation, via une ouverture pratiquée transversalement dans la paroi de cette dernière.

Pour améliorer encore les conditions d'intervention, l'invention propose un dispositif de ce type, perfectionné, caractérisé en ce que le sas du dispositif est constitué par une poche étanche, souple, déformable, résistant à la pression de gaz régnant dans la canalisation.

De préférence, la consistance et l'épaisseur de la matière constituant la poche en question sera telle que l'opérateur pourra avoir, à travers cette poche, une sensation tactile desdits moyens d'intervention ou d'investigation comparable à celle qu'il aurait s'il pouvait toucher ces derniers avec un contact direct, physique.

Toujours concernant cette poche, elle pourra en particulier se présenter comme une culotte à deux jambes logeant par exemple chacune un ballon gonflable, ou encore comme un manchon tubulaire équipé d'un dispositif oculaire.

Quoi qu'il en soit, l'un des avantages du sas de l'invention consiste en la possibilité pour l'opérateur d'intervenir très aisément sur, ou dans, la canalisation sans subir de dégagement incontrôlable de gaz émanant de l'intérieur de cette canalisation.

En complément au dispositif de protection qui vient d'être présenté, l'invention se rapporte également à la poche d'isolation en tant que telle, comme brièvement présentée ci-dessus et dont les caractéristiques apparaissent clairement dans la revendication 9 jointe.

Pour une description plus détaillée de l'invention, on se reportera à la description qui va suivre faite en référence aux dessins annexés donnés uniquement à titre d'exemples non limitatifs et dans lesquels :
la figure 1 est une vue schématique en perspective d'une forme possible de réalisation du dispositif de protection de l'invention ;
la figure 2 est une vue en coupe transversale médiane d'une canalisation sur laquelle est monté le dispositif de la figure 1 ;
la figure 3 est une vue schématique partielle en coupe transversale médiane du dispositif de la figure 1, montrant des ballons d'obturation dans la canalisation;
la figure 4 est une vue agrandie du détail IV de la figure 2
la figure 5 est une vue en éclaté de la pièce d'adaptation du sas à la canalisation;
la figure 6 montre une forme possible de réalisation d'un réducteur utilisable sur la pièce de la figure 5 pour des canalisations de petit diamètre;
et la figure 7 illustre schématiquement et en coupe transversale médiane le sas de l'invention équipé d'un dispositif d'investigation de la canalisation autre que celui des figures précédentes.

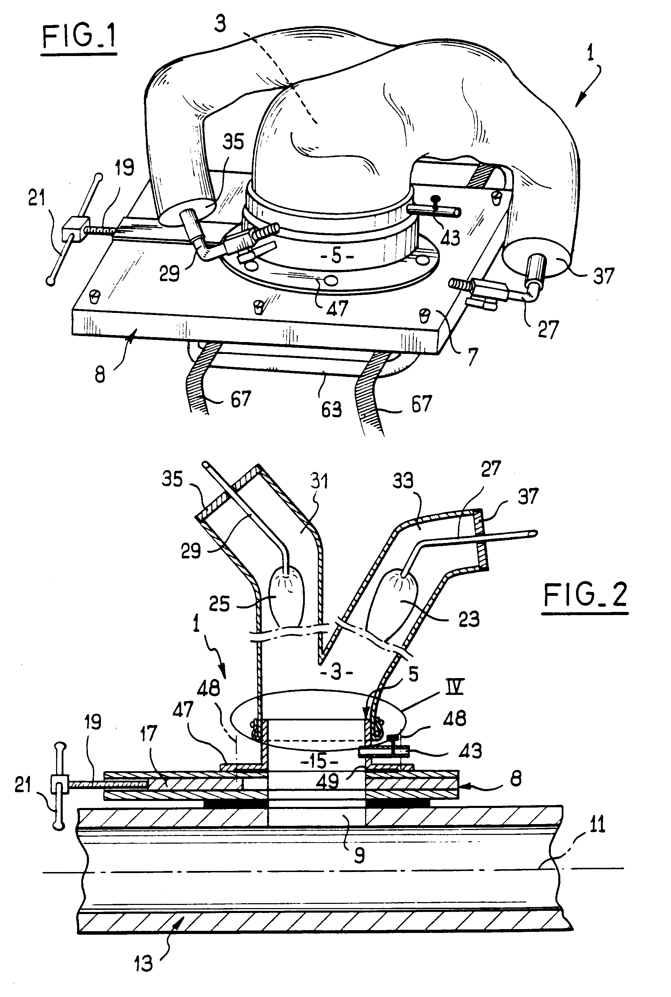

Sur les figures 1 et 2 tout d'abord, on voit donc illustrée une forme possible de réalisation d'un dispositif de protection ou d'isolation conforme à l'invention et repéré dans son ensemble 1.

Le dispositif 1 comprend un sas 3 étanche relié, par une embase ou virole métallique 5, au socle également métallique 7 d'une pièce d'adaptation 8 permettant de venir adapter le sas en regard d'un orifice 9 ménagé à travers la paroi et transversalement à l'axe 11 d'une canalisation 13 de distribution de gaz, tel que du gaz naturel.

Comme on peut le voir sur la figure 2, l'intérieur du sas et la canalisation communiquent l'un avec l'autre via l'ouverture 15 de la virole 5 et du socle 7, cette ouverture étant obturable par un opercule 17 pouvant glisser le long du socle sous la commande d'une tige filetée 19 manoeuvrable par un levier extérieur 21.

Dans le cadre de la figure 2, le sas est utilisé en tant qu'élément d'isolation pour la mise en place de ballons d'obturation 23, 25 à l'intérieur de la canalisation 13.

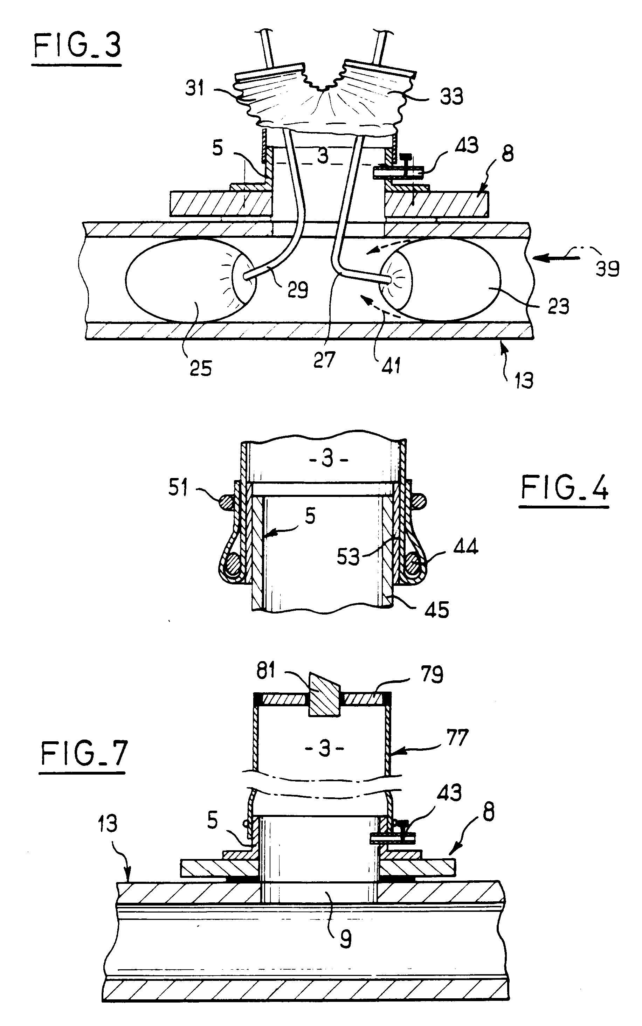

Comme on peut le voir, notamment sur cette figure, les ballons ainsi qu'une partie de leurs conduits coudés rigides 27, 29 d'alimentation en gaz sont disposés, de façon sensiblement étanche au gaz, à l'intérieur du sas et vont donc pouvoir être introduits dans la canalisation 13 (figure 3) sans que l'opérateur qui les manipule depuis l'extérieur du sas ait à subir une quelconque émanation nocive provenant de la canalisation via son ouverture 9.

Compte-tenu du type d'intervention sur canalisation retenu à titre d'exemple, le sas 3 consiste en l'espèce en une poche souple déformable étanche au gaz, propre bien entendu à résister à la pression régnant dans la canalisation, pression habituellement de l'ordre de 20 à 50.10² Pa.

Le dispositif de l'invention sera donc d'une façon générale destiné à être utilisé sur les canalisations de gaz du type basse pression.

De ce fait, une poche en tissu enduit de polyuréthanne sur ses deux faces serait tout à fait appropriée.

Pour améliorer encore les conditions de travail, on pourrait même imaginer une poche transparente.

Quoi qu'il en soit, la consistance et l'épaisseur de la matière constituant la poche sera avantageusement telle que l'opérateur pourra, à travers la poche, avoir une sensation tactile des ballons (ou de leur conduit d'alimentation) comparable à celle qu'il aurait s'il pouvait les toucher par un contact physique direct.

En l'espèce, la poche 3 se présente, comme on peut le voir clairement sur la figure 2, sous la forme d'une culotte comprenant deux jambes 31, 33 communicantes. A l'opposé de l'endroit où elles communiquent, ces jambes sont fermées par une pièce transversale de fermeture 35, 37 étanche au gaz et à travers chacune desquelles est monté, également de façon étanche et avec possibilité de glissement, l'un des conduits 27, 29 de distribution de gaz aux ballons. Pour assurer l'étanchéité, des joints classiques peuvent être utilisés.

Ainsi, pour mettre en place les ballons dans la canalisation, il suffira à l'opérateur de prendre en main la partie des conduits 27, 29 située à l'extérieur du sas et de pousser ces mêmes conduits pour les faire coulisser à travers l'orifice des pièces de fermeture 35, 37, en déformant, en aplatissant voire en retournant à la manière d'une chaussette, le sas jusqu'à guider les ballons (alors encore dégonflés) en les faisant pénétrer, à travers les ouvertures du socle et de la canalisation, à l'intérieur de cette dernière où les ballons seront alors gonflés jusqu'à obturation la plus complète possible de la canalisation (voir figure 3).

On remarquera que sur la figure 3 on a repéré par la flèche 39 le sens prévu de circulation du gaz à l'intérieur de la canalisation, le flux de gaz rencontrant ainsi d'abord le premier ballon 23 qui forme un premier obstacle en amont de l'orifice 9, puis le second ballon 25 qui forme donc un second obstacle à la circulation du gaz, en aval de ce même orifice 9.

Etant donné qu'en règle générale une fuite minime schématisée par la flèche 41 persiste à la périphérie du premier ballon 23 au moins, il est conseillé d'adjoindre au dispositif d'isolation de l'invention un évent 43 fixé latéralement à la virole 5, cet évent pouvant être connecté à un tuyau souple (non représenté) permettant d'évacuer cette légère fuite résiduelle de gaz à distance du lieu d'intervention.

Intéressons-nous maintenant aux figures 3 et 4 pour décrire brièvement la façon dont le sas peut, à sa base, être fixé de façon sensiblement étanche au gaz à la virole 5 de la pièce d'adaptation 8.

En l'espèce, l'extrémité inférieure de la poche 3 est ici repliée pour former une boucle renfermant un anneau de maintien 44. L'anneau 44 vient entourer le fût 45 de la virole, au-dessus de la collerette d'appui 47 de cette dernière par laquelle celle-ci est fixée au socle 7 par l'intermédiaire de vis de fixation schématisées par leur trace 48, avec interposition d'un joint d'étanchéité tel que 49.

Le maintien de la poche 3 est ici assuré par un collier de serrage 51. Pour limiter les risques de déchirure de la poche, on a préféré interposer entre cette dernière et le fût 45, un joint souple d'étanchéité 53.

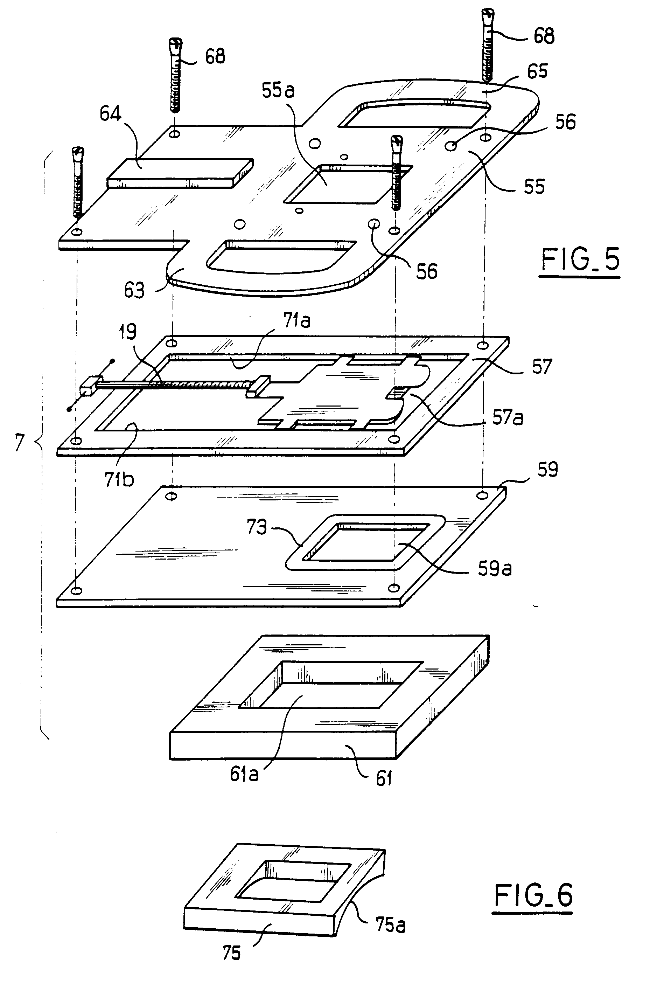

Sur la figure 5 on a représenté schématiquement et en vue éclatée, une forme possible de réalisation de la pièce d'adaptation 8.

Sur cette illustration, la pièce 8 est constituée par l'empilement successif d'une platine supérieure 55, d'un cadre intermédiaire 57, d'une platine inférieure 59 et d'un cadre d'appui 51 pour le montage en étanchéité de la pièce 8 sur la canalisation.

Chaque pièce 55, 57, 59, 61 est percée en correspondance d'un orifice 55a, 57a, 59a, 61a, l'ensemble de ces orifices formant le passage 15 prévu pour la communication entre le sas et l'intérieur de la canalisation.

La platine 55 qui reçoit en appui sur elle la virole 5 (non représentée) à l'endroit d'orifices de fixation 56, est équipée de deux arceaux latéraux 63, 65 adaptés pour recevoir à travers eux les moyens de maintien temporaires de la pièce 8 autour de la canalisation, tels par exemple que les sangles 67 représentées sur la figure 1. La platine 55 porte également un carter 64 de protection de la tige filetée 19 de commande en translation de l'opercule 17 lequel est en l'espèce logé dans l'épaisseur du cadre 57 où il peut glisser le long de l'orifice 57a en étant guidé par les parois latérales 71a, 71b pour découvrir ou recouvrir à volonté l'orifice 59a de la platine inférieure 59. Pour éviter les fuites de gaz une fois l'opercule fermé, l'orifice 59a est bordé par un joint périphérique 73. Quant au cadre d'appui 61, il sera de préférence réalisé en un matériau d'étanchéité déformable, tel que de l'élastomère, pour pouvoir s'adapter étroitement à la forme de la canalisation une fois la pièce 8 serrée sur cette dernière par les sangles 67.

Des moyens de liaison tels que des vis 68 permettent d'assurer une jonction étroite en pile des différentes pièces du socle 7 dont le cadre d'appui 61 peut éventuellement être simplement collé sous la platine 59.

Dans le cas où le diamètre de la canalisation sur laquelle il faut intervenir sera faible (inférieur à 100 mm environ), il a été prévu d'adjoindre une pièce amovible supplémentaire représentée sur la figure 6, de dimensions réduites, en forme de cadre 75 constituant un réducteur, lequel viendra alors s'engager à l'intérieur du cadre d'appui 61 en réduisant l'ouverture de communication prévue entre le sas et la canalisation. De préférence, ce cadre 75 présentera un côté 75a, en forme d'arc de cercle, venant s'adapter autour de la canalisation.

Reportons-nous maintenant à la figure 7 pour voir illustrée une variante de réalisation de la partie formant sas du dispositif de protection ou d'isolation de l'invention.

Sur cette figure 7, le sas prend la forme d'un manchon tubulaire souple 77 ouvert à sa base, en regard de l'orifice 9 de la canalisation, et fermé à son extrémité "supérieure" par un bouchon d'étanchéité 79 pouvant consister en une vitre entourant, en partie centrale, un dispositif oculaire 81 à prisme permettant, depuis l'extérieur du sas, de regarder à l'intérieur de la canalisation pour en constater l'état. Il est clair que d'autres moyens d'investigation que le dispositif 81 pourraient être montés sur le sas 3, tels qu'un balai pour nettoyer la canalisation ou un aimant pour enlever la limaille.

## Revendications

1. Dispositif de protection, contre des dégagements incontrôlables de gaz, d'un opérateur devant mener, depuis l'extérieur, une investigation ou une intervention sur ou à l'intérieur d'une canalisation (13) dans laquelle circule du gaz nocif en atmosphère basse pression, le dispositif comprenant :
- un sas (3) auquel sont réunis des moyens (23, 25, 81) d'investigation ou d'intervention sur, ou dans, la canalisation (13), lesdits moyens étant manoeuvrables depuis l'extérieur du sas pour éviter à l'opérateur d'être en contact avec l'atmosphère régnant dans la canalisation,
- et une pièce (8) d'adaptation transversale du sas de la canalisation, ladite pièce présentant un orifice (15) obturable par un opercule (17) pour faire communiquer à volonté le sas (3) avec l'intérieur de ladite canalisation, via une ouverture (9) pratiquée transversalement dans la paroi de cette dernière,
caractérisé en ce que le sas (3) est constitue par une poche étanche, souple, déformable, résistant à la pression de gaz régnant dans la canalisation.

2. Dispositif selon la revendication 1 caractérisé en ce que ladite poche (3) est ouverte d'un côté pour une communication avec l'atmosphère régnant à l'intérieur de la canalisation et fermée, de façon sensiblement étanche au gaz, du côté opposé par au moins une pièce de fermeture (35, 37, 79) portant, également de façon sensiblement étanche au gaz, lesdits moyens (23, 25, 81) d'investigation ou d'intervention dans, ou sur, ladite canalisation.

3. Dispositif selon la revendication 1 ou la revendication 2 caractérisé en ce que la consistance et l'épaisseur de la matière constituant la poche (3) sont telles que l'opérateur a, à travers ladite poche, une sensation tactile desdits moyens (23, 25, 81) d'intervention ou d'investigation comparable à celle qu'il aurait s'il pouvait les toucher avec un contact physique direct.

4. Dispositif selon l'une des revendications 1 à 3 caractérisé en ce que la poche (3) se présente sous la forme d'un manchon tubulaire.

5. Dispositif selon l'une quelconque des revendications précédentes caractérisé en ce que la poche (3) se présente sous la forme d'une culotte comprenant deux jambes (31, 33) communicantes.

6. Dispositif selon l'une quelconque des revendications précédentes caractérisé en ce que ladite poche renferme au moins un ballon gonflable (23, 25) raccordé à un moyen de gonflage par un tube d'alimentation (27, 29) pour que ce ballon puisse être introduit dans la canalisation à travers les ouvertures respectives du sas (3) et de la canalisation, pour obturer cette dernière.

7. Dispositif selon l'une quelconque des revendications 2 à 5 caractérisé en ce que ladite pièce (79) de fermeture de la poche porte un dispositif oculaire (81).

8. Dispositif selon l'une quelconque des revendications précédentes caractérisé en ce que la pièce (8) d'adaptation comprend une pile d'éléments constitués successivement par :
- une platine supérieure (55) réunie d'un côté audit sas (3) et à travers laquelle est formée une ouverture (55a),
- un cadre intermédiaire (57) dont l'ouverture (57a) vient en correspondance de celle de la platine supérieure (55), ce cadre intermédiaire portant ledit opercule (17) qui peut glisser le long dudit cadre pour obturer ou découvrir son ouverture,
- une platine inférieure (59) également pourvue d'une ouverture (59a) bordée par un joint d'étanchéité (73) et formée en correspondance des deux ouvertures (55a, 57a) précédentes,
- et un cadre d'appui (61), déformable pour une adaptation sensiblement étanche à la forme de la canalisation (13), ladite pièce d'adaptation comprenant en outre :
- des moyens (68) de fixation pour la liaison entre eux de ces éléments empilés.

9. Poche d'isolation (3) formant élément d'un dispositif (1) de protection, contre des dégagements incontrôlables de gaz, d'un opérateur devant mener depuis l'extérieur une investigation ou une intervention sur ou à l'intérieur d'une canalisation (13) dans laquelle circule du gaz nocif en atmosphère basse pression, ladite poche (3), qui est réalisée en un matériau étanche, souple, résistant à la pression de gaz régnant dans ladite canalisation, étant ouverte d'un côté pour une communication avec l'atmosphère régnant à l'intérieur de cette canalisation et fermée, de façon sensiblement étanche au gaz, du côté opposé par au moins une pièce de fermeture (35, 37, 39) portant, également de façon sensiblement étanche au gaz, des moyens (23, 25, 81) d'investigation ou d'intervention sur, ou dans, la canalisation, lesquels moyens sont manoeuvrables depuis l'extérieur de la poche pour éviter à l'opérateur d'être en contact avec l'atmosphère régnant dans cette canalisation.

10. Poche selon la revendication 9 caractérisée en ce qu'elle est reliée à une pièce (8) d'adaptation pour son montage sur ladite canalisation avec laquelle elle doit communiquer, des moyens d'obturation (17) déplaçables permettant à volonté de faire communiquer ou d'isoler de la canalisation l'intérieur de ladite poche (3) pour que cette dernière forme un sas.

## Claims

1. Device for protection against uncontrollable releases of gas for an operator having to carry out, from the exterior, an investigation or an operation on or inside a duct (13) in which noxious gas circulates in a low-pressure atmosphere, the device comprising:
- an air-lock (3) to which means (23, 25, 81) for investigating or operating on or in the duct (13) are connected, the said means being manoeuvrable from outside the air-lock to prevent the operator from being in contact with the atmosphere prevailing in the duct; and
- a component (8) for the transverse adaptation of the air-lock to the duct, the said component having a hole (15) which can be closed by a cover (17) for putting the air-lock (3) into communication with the interior of the said duct at will through an opening (9) formed transversely in the wall of the latter;
characterised in that the air-lock (3) is constituted by a leaktight, flexible, deformable pouch able to withstand the gas pressure prevailing in the duct.

2. Device according to Claim 1, characterised in that the said pouch (3) is open on one side for communication with the atmosphere prevailing inside the duct and is closed in a substantially gas-tight manner on the opposite side by at least one closure element (35, 37, 79) carrying, also in a substantially gas-tight manner, the said means (23, 25, 81) for investigating or operating in or on the said duct.

3. Device according to Claim 1 or Claim 2, characterised in that the firmness and thickness of the material constituting the pouch (3) are such that the feel to the operator of the said operating or investigating means (23, 25, 81) through the said pouch is comparable to that which he would have if he could touch them with direct physical contact.

4. Device according to any one of Claims 1 to 3, characterised in that the pouch (3) is in the form of a tubular sleeve.

5. Device according to any one of the preceding claims, characterised in that the pouch (3) is in the form of a Y-pipe comprising two communicating legs (31, 33).

6. Device according to any one of the preceding claims, characterised in that the said pouch contains at least one inflatable balloon (23, 25) connected to inflation means by a supply pipe (27, 29) so that the balloon can be introduced into the duct through the respective openings of the air-lock (3) and of the duct, to close the latter.

7. Device according to any one of Claims 2 to 5, characterised in that the said closure element (79) of the pouch carries an eyepiece device (81).

8. Device according to any one of the preceding claims, characterised in that the adaptation component (8) comprises a stack of elements constituted, in succession, by:
- an upper plate (55) which is connected to the said air-lock (3) on one side and through which an opening (55a) is formed;
- an intermediate frame (57) the opening (57a) of which corresponds to that of the upper plate (55), this intermediate frame carrying the said cover (17) which can slide along the said frame in order to close or uncover its opening;
- a lower plate (59) also provided with an opening (59a) edged by a leaktight seal (73) and formed so as to correspond to the two preceding openings (55a, 57a); and
- a support frame (61) which can be deformed for substantially leaktight adaptation to the shape of the duct (13);
the said adaptation component also comprising:
- fixing means (68) for interconnecting these piled-up elements.

9. Isolation pouch (3) forming a component of a device (1) for protection against uncontrollable releases of gas for an operator having to carry out, from the exterior, an investigation or an operation on or inside a duct (13) in which noxious gas circulates in a low-pressure atmosphere, the said pouch (3) which is formed of a leaktight, flexible material able to withstand the gas pressure prevailing in the said duct, being open on one side for communication with the atmosphere prevailing inside this duct and closed in a substantially gas-tight manner on the opposite side by at least one closure element (35, 37, 39) carrying, also in a substantially gas-tight manner, means (23, 25, 81) for investigating or operating on or in the duct, the means being manoeuvrable from outside the pouch to prevent the operator being in contact with the atmosphere prevailing in this duct.

10. Pouch according to Claim 9, characterized in that it is connected to an adaptation component (8) for mounting the pouch on the said duct with which it has to communicate, movable sealing means (17) allowing the pouch (3) to communicate with or to be isolated from the duct at will, so that the said pouch (3) forms an air-lock.

## Patentansprüche

1. Schutzvorrichtung gegen unkontrollierbares Entweichen von Gas für einen Bedienungsmann, der von außen eine Untersuchung oder einen Eingriff an oder im Inneren einer Rohrleitung (13) durchführen muß, in der schädliches Gas unter einer Niedrigdruckatmosphäre zirkuliert, wobei die Vorrichtung aufweist:
- eine Schleuse (3), mit welcher Mittel (23, 25, 81) zur Untersuchung oder zum Eingriff auf oder in der Rohrleitung (13) vereinigt sind, wobei die Mittel von außerhalb der Schleuse bedienbar sind, um zu vermeiden, daß der Bedienungsmann Kontakt mit der Atmosphäre hat, die in der Rohrleitung herrscht,
- und ein querliegendes Stück (8) für die Anpassung der Schleuse an die Rohrleitung, wobei das Stück eine durch einen Deckel (17) verschließbare Öffnung (15) aufweist, um nach Wunsch die Schleuse (3) mit dem Inneren der Rohrleitung über eine Öffnung (9) in Verbindung zu bringen, die quer in der Wand der letzteren ausgeführt ist,
dadurch gekennzeichnet, daß die Schleuse (3) aus einem dichten, weichen, verformbaren Sack besteht, der dem in der Rohrleitung herrschenden Gasdruck widersteht.

2. Vorrichtung nach Anspruch 1, dadurch gekennzeichnet, daß der Sack (3) auf einer Seite für eine Verbindung mit der im Inneren der Rohrleitung herrschenden Atmosphäre geöffnet und in im wesentlichen gasdicht auf der entgegengesetzten Seite durch mindestens ein Verschlußstück (35, 37, 79) geschlossen ist, welches ebenfalls in im wesentlichen in gasdichter Weise die Mittel (23, 25, 81) für die Untersuchung oder den Eingriff in oder an der Rohrleitung trägt.

3. Vorrichtung nach Anspruch 1 oder Anspruch 2, dadurch gekennzeichnet, daß die Konsistenz und die Dicke des den Sack (3) bildenden Materials derart sind, daß der Bedienungsmann quer durch den Sack eine Tastfühlung der Mittel (23, 25, 81) für die Untersuchung oder den Eingriff hat, vergleichbar mit dieser, welche er hätte, wenn er sie mit einem direkten Körperkontakt berühren könnte.

4. Vorrichtung nach einem der Ansprüche 1 bis 3, dadurch gekennzeichnet, daß der Sack (3) die Form einer rohrförmigen Muffe aufweist.

5. Vorrichtung nach einem der vorhergehenden Ansprüche, dadurch gekennzeichnet, daß der Sack (3) die Form einer Hose mit zwei in Verbindung stehenden Beinen (31, 33) aufweist.

6. Vorrichtung nach einem der vorhergehenden Ansprüche, dadurch gekennzeichnet, daß der Sack mindestens einen aufblasbaren Ballon (23, 25) einschließt, der mit einem Aufblasmittel durch ein Versorgungsrohr (27, 29) verbunden ist, damit der Ballon in die Rohrleitung quer durch die jeweiligen Öffnungen der Schleuse (3) und der Rohrleitung eingeführt werden kann, um letztere zu verschließen.

7. Vorrichtung nach einem der Ansprüche 2 bis 5, dadurch gekennzeichnet, daß das Verschlußstück (79) des Sackes eine Okularvorrichtung (81) trägt.

8. Vorrichtung nach einem der vorhergehenden Ansprüche, dadurch gekennzeichnet, daß das Anpassungsstück (8) einen Stapel von Teilen aufweist, die nacheinander gebildet sind durch:
- eine obere Platte (55), die auf einer Seite mit der Schleuse (3) verbunden ist und quer durch welche eine Öffnung (55a) gebildet ist,
- einen Zwischenrahmen (57), dessen Öffnung (57a) dieser der oberen Platte (55) entspricht, wobei der Zwischenrahmen den Deckel (17) trägt, der längs des Rahmens gleiten kann, um seine Öffnung zu verschließen oder freizulegen,
- eine untere Platte (59), die ebenfalls mit einer Öffnung (59a) versehen ist, welche durch eine Dichtung (73) eingefaßt und entsprechend den beiden vorhergehenden Öffnungen (55a, 57a) gebildet ist,
- und einen Stützrahmen (61), der für eine im wesentlichen dichte Anpassung an die Form der Rohrleitung (13) verformbar ist,
wobei das Anpassungsstück außerdem aufweist:
- Befestigungsmittel (68) für die Verbindung dieser aufgeschichteten Teile untereinander.

9. Isoliersack 3, der Element einer Schutzvorrichtung (1) gegen unkontrollierbaren Gasaustritt für einen Bedienungsmann ist, der von außen eine Untersuchung oder einen Eingriff auf oder im Inneren einer Rohrleitung (13) durchführen muß, in der schädliches Gas unter einer Niederdruckatmosphäre zirkuliert, wobei der Sack (3), der aus einem dichten, weichen, dem in der Rohrleitung herrschenden Gasdruck widerstehenden Material ausgeführt ist, auf einer Seite für eine Verbindung mit der im Inneren dieser Rohrleitung herrschenden Lufthülle geöffnet und in für Gas im wesentlichen dichter Weise auf der entgegengesetzten Seite durch mindestens ein Verschlußstück (35, 37, 39) geschlossen ist, welches ebenfalls in für Gas im wesentlichen dichter Weise Mittel (23, 25, 81) für die Untersuchung oder den Eingriff an oder in der Rohrleitung trägt, wobei die Mittel von außerhalb des Sackes betätigbar sind, um zu vermeiden, daß der Bedienungsmann mit der in der Rohrleitung herrschenden Atmosphäre in Kontakt kommt.

10. Sack nach Anspruch 9, dadurch gekennzeichnet, daß er mit einem Anpassungsstück (8) für seine Montage an der Rohrleitung verbunden ist, mit welcher er in Verbindung stehen soll, wobei die verschiebbaren Verschlußmittel (17) nach Wunsch erlauben, das Innere des Sackes (3) mit der Rohrleitung in Verbindung zu bringen oder von dieser zu isolieren, damit der Sack eine Schleuse bildet.
